(19) Europäisches Patentamt
European Patent Office
Office européen des brevets

(11) **EP 2 359 339 B1**

(12) **FASCICULE DE BREVET EUROPEEN**

(45) Date de publication et mention
de la délivrance du brevet:
**05.06.2013 Bulletin 2013/23**

(21) Numéro de dépôt: **09760219.7**

(22) Date de dépôt: **27.10.2009**

(51) Int Cl.:
***G06T 17/30*** *(2006.01)*

(86) Numéro de dépôt international:
**PCT/FR2009/052061**

(87) Numéro de publication internationale:
**WO 2010/049636 (06.05.2010 Gazette 2010/18)**

(54) **PROCÉDÉ DE CONCEPTION ASSISTÉE PAR ORDINATEUR POUR CRÉER UNE SURFACE DANS UN SYSTÈME COMPLEXE**

COMPUTERUNTERSTÜTZTES ENTWURFSVERFAHREN ZUM ERZEUGEN EINER OBERFLÄCHE IN EINEM KOMPLEXEN SYSTEM

COMPUTER-ASSISTED DESIGN METHOD FOR GENERATING A SURFACE IN A COMPLEX SYSTEM

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **27.10.2008 FR 0857272**

(43) Date de publication de la demande:
**24.08.2011 Bulletin 2011/34**

(73) Titulaire: **SNECMA**
**75015 Paris (FR)**

(72) Inventeur: **SAUTREAU, Delphine**
**F-91550 Paray-Vieille Poste (FR)**

(74) Mandataire: **Delumeau, François Guy et al**
**Cabinet Beau de Loménie**
**158, rue de l'Université**
**75340 Paris Cedex 07 (FR)**

(56) Documents cités:
**EP-A- 0 846 867      EP-A- 1 681 438**
**WO-A-01/08102      US-A1- 2007 258 818**
**US-B1- 6 204 860**

- **THOMAS REUDING ET AL: "Automatic local updating of CAD surface models" PROCEEDINGS OF THE SIAM CONFERENCE ON GEOMETRIC DESIGN, XX, XX, 1 janvier 1993 (1993-01-01), pages 1-10, XP002292917**
- **J.D. FOLEY ET AL.: "Computer Graphics (pages 279-281)" juillet 1997 (1997-07), ADDISON-WESLEY , BOSTON USA , XP002562665 figure 6.59 page 280, alinéa 1**
- **KNITIX: "3D Studio Max User's Guide" 3D STUDIO MAX USER'S GUIDE, KINETIX, US, vol. 1, 15 mars 1996 (1996-03-15), page complete, XP007901949**
- **REMLINGER ET AL.: "Sichtanalyse mit dem Menschmodell RAMSIS unter Berücksichtigung altersbedingter Sehschwächen"[Online] 15 mai 2008 (2008-05-15), - 16 mai 2008 (2008-05-16) pages 1-32, XP002569251 Extrait de l'Internet: URL:http://www.dguv.de/iag/de/veranstaltun gen/weitere/produktdesign/_dokumente/Remli nger.pdf>**
- **CHAND ET AL.: "Turbomachinery Blade Optimization Using the Navier-Stokes Equations" LAWRENCE LIVERMORE NATIONAL LABORATORY, [Online] décembre 1997 (1997-12), pages 1-10, XP007911768 Extrait de l'Internet: URL:http://www.osti.gov/bridge/ servlets/pu rl/300434-xxDE2T/webviewable/ 300434.pdf>**

## Description

Arrière-plan de l'invention

La présente invention se situe dans le domaine général de la conception de produits assistée par ordinateur (CAO) en vue de leur fabrication.

Plus particulièrement, l'invention s'attaque au problème de la modélisation, de la création et de l'optimisation de structures complexes dans un environnement industriel.

Le document WO 01/08102 décrit un procédé et un système de CAO pour le conception d'objets géométriques.

Le document US 6 268 871 B1 décrit un procédé de génération par un ordinateur d'une courbe passant par des points.

Le document de T. Reuding et al. intitulé « Automatic local updating of CAD surface models », Proceeding of the SIAM Conference on Geomtric Design, 1er janvier 1993, pages 1-10, décrit un procédé de mise à jour et de modification d'un modèle de surface existant.

L'invention s'applique en particulier mais de façon non limitative, à la modélisation, à la création et à l'optimisation des plateformes tridimensionnelles de type de celles utilisées dans la soufflante d'un turboréacteur. Il est connu, dans le métier de la CAO, de concevoir des systèmes devant respecter un ensemble de contraintes prédéfinies.

De telles contraintes peuvent par exemple être constituées par des contraintes mécaniques, aérodynamiques ou géométriques.

Lors de la conception d'un système complexe, certaines contraintes peuvent être « générales » au sens où elles s'appliquent à tout le système et d'autres « particulières » au sens où elles ne s'appliquent qu'à un sous-système du système complexe.

Par exemple, pour la conception d'un turboréacteur, il est connu de respecter une contrainte aérodynamique générale qui impose que deux surfaces contigües soient tangentes, ou une contrainte qui impose que les courbes génératrices d'une surface s'expriment sous la forme d'un polynôme du deuxième degré.

De façon connue, l'ensemble des contraintes à respecter se traduit, dans l'outil de CAO, par un ensemble d'équations, les surfaces du système à concevoir devant être choisies parmi les solutions de cet ensemble d'équations.

L'invention vise un outil de CAO dans lequel l'expression de ces équations est excessivement simplifiée.

Objet et résumé de l'invention

Selon un premier aspect, l'invention concerne un procédé pouvant être mis en oeuvre par un ordinateur pour créer, à partir d'une première surface axisymétrique, une deuxième surface appartenant à un sous-système d'un système complexe, cette deuxième surface devant respecter au moins une contrainte. Ce procédé comprend :

- une étape de modélisation de la première surface axisymétrique, dans le respect de cette contrainte, avec au moins un paramètre, cette étape de modélisation comportant :

  - une sous-étape de discrétisation permettant d'identifier au moins un point de la première surface axisymétrique, le paramètre précité étant une coordonnée d'un de ces points dans un repère associé à au moins une partie de ce sous-système ; et
  - une sous-étape de reconstruction de la première surface axisymétrique à partir de ce point et de la contrainte à respecter ;

- une étape de modification du paramètre pour modéliser la deuxième surface; et
- une étape d'enregistrement de la deuxième surface dans une mémoire de l'ordinateur.

D'une façon générale, la modélisation de la deuxième surface selon l'invention commence par la modélisation d'une première surface axisymétrique dite d'origine, celle-ci constituant une bonne base de départ pour atteindre la deuxième surface à modéliser.

Par exemple, si l'on souhaite créer une deuxième surface constituée par un cylindre présentant un bossage, on pourra choisir, comme première surface axisymétrique, un cylindre parfait.

Conformément à l'invention, on modélise cette surface axisymétrique d'origine avec au moins un paramètre, le modèle devant respecter les contraintes de la deuxième surface.

Très avantageusement, cette modélisation est simplifiée, la première surface étant choisie axisymétrique.

Si l'on reprend l'exemple du cylindre, l'invention propose de modéliser le cylindre parfait par au moins une coordonnée d'un point de ce cylindre et par une contrainte géométrique devant être respectée par le cylindre avec bossage.

Conformément à l'invention, et de façon très avantageuse, la coordonnée du point (ou des points) utilisé pour modéliser la surface axisymétrique d'origine est exprimée dans un repère associé à au moins une partie du sous-système auquel appartient la surface à modéliser.

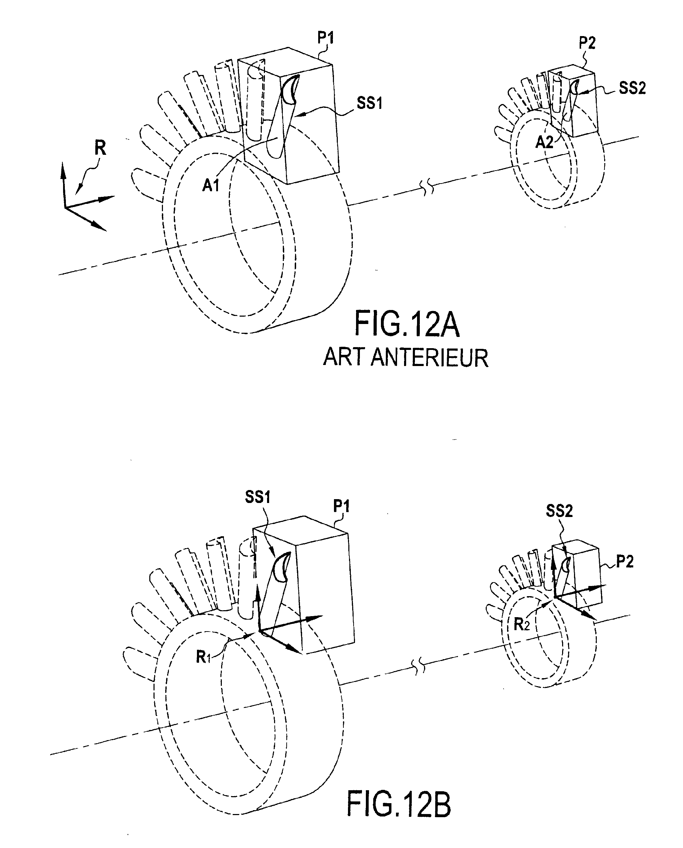

La figure 12A illustre les inconvénients des systèmes de CAO de l'art antérieur. Sur cette figure, on a représenté deux sous-systèmes SS1 et SS2 d'un système complexe SC.

Dans cet exemple, le système complexe SC est constitué par un turboréacteur, et les sous systèmes SS1, SS2 par un étage d'aubes A1 du compresseur et par un étage d'aubes A2 de la turbine.

Dans cet exemple, chaque aube A1, A2 doit respecter une contrainte, à savoir être contenue dans un parallélépipède P1, P2.

Dans ce système de CAO, les équations des surfaces des aubes A1, A2 et des contraintes (équations des parallélépipèdes P1, P2) s'expriment dans un même repère R.

Au contraire, dans l'invention, et comme représenté à la figure 12B, les équations des surfaces et des contraintes sont exprimées dans des repères locaux à au moins une partie des sous-systèmes concernés.

Plus précisément, dans cet exemple de la figure 12B, on utilise un repère R1 associé au premier étage d'aubes et un repère R2 associé au deuxième étage d'aubes.

Dans un mode de réalisation de l'invention, la modélisation pourrait simplement consister à discrétiser la surface axisymétrique d'origine en de très nombreux points.

Mais en pratique, l'utilisation d'un tel modèle serait complexe, car l'utilisateur serait obligé, pour modifier l'aspect de la surface non axisymétrique, de jouer sur les coordonnées des points pris individuellement.

C'est pourquoi l'invention propose, dans un mode de préféré de réalisation de modéliser la surface par un ensemble réduit de points, la surface axisymétrique d'origine étant reconstruite à partir de ces points et d'au moins une contrainte.

Un exemple de contrainte peut être une contrainte de tangence.

Ainsi, si l'on souhaite modéliser un cylindre déformé par un bossage, tout en respectant des contraintes de tangence du bossage au cylindre d'origine, il suffira en pratique de choisir quelques points dans la région du bossage, notamment à l'intersection du bossage et du cylindre d'origine, et de lier ces points par des critères de tangence, de sorte que si l'utilisateur modifie les coordonnées d'un point du bossage pour l'écarter de la surface d'origine, les coordonnées des autres points sont modifiées automatiquement dans le respect des contraintes de tangence.

Cette opération est bien entendu beaucoup moins fastidieuse que celle de la modification des coordonnées de chacun des points du bossage pris individuellement.

Dans un mode particulier d'utilisation de l'invention, on souhaite modéliser la surface au voisinage d'une deuxième surface dite «de repère» comportant une intersection avec la surface non axisymétrique.

Dans ce cas, l'invention propose avantageusement, de définir le repère associé au sous-système en fonction de la surface axisymétrique d'origine et de la surface de repère.

Par exemple, si l'on souhaite déformer un cylindre au voisinage d'une surface plane intersectant ce cylindre, il pourra être envisagé de définir un repère dont deux dimensions définissent un plan coplanaire à cette deuxième surface.

Selon un deuxième aspect, l'invention concerne un procédé d'optimisation d'une deuxième surface à partir d'une première surface axisymétrique, ce procédé comportant :

- une étape de définition d'au moins une contrainte et d'un critère d'optimisation dont la valeur dépend de la deuxième surface ;
- une étape d'établissement d'un plan d'expérience définissant une pluralité de combinaisons comportant différentes valeurs de paramètres ;
- une étape de création d'une deuxième surface selon un procédé de création de surface tel que mentionné ci-dessus pour chacune des combinaisons ;
- une étape de mesure et de sauvegarde du critère d'optimisation de la surface correspondant à chacune des combinaisons; et
- une étape de sélection des paramètres de la combinaison pour laquelle le critère d'optimisation est optimal.

D'une façon générale, ce procédé d'optimisation cherche à déterminer les paramètres permettant d'obtenir la surface qui optimise le critère d'optimisation choisi.

Pour cela, on établit un plan d'expérience avec plusieurs combinaisons de paramètres, on modélise la surface axisymétrique comme mentionné précédemment pour chacune des combinaisons de paramètres, on mesure le critère d'optimisation de la surface pour chaque combinaison puis on sélectionne les paramètres de la surface pour lesquels le critère d'optimisation est optimal.

Dans un mode particulier de réalisation de l'invention, on souhaite pouvoir modéliser les surfaces dans l'environnement du logiciel de CAO CATIA V5 (marque déposée) de la Société Dassault Systèmes.

En conséquence, l'invention vise, selon un troisième aspect, un procédé de création d'un modèle informatique utilisable dans l'outil de CAO CATIA V5 (marque déposée) comportant une étape de création d'une deuxième surface sous contrainte à partir d'une première surface axisymétrique selon un procédé de création de surface tel que mentionné ci-dessus, le modèle informatique ayant pour entrée cette surface axisymétrique d'origine et une deuxième surface de repère quelconque, les paramètres du procédé de modélisation étant les paramètres du modèle informatique.

On rappelle qu'un "modèle" ou "modèle intelligent" est, dans le domaine de la CAO, une entité CATIA V5 (marque déposée) dans laquelle sont encapsulées plusieurs entités géométriques définies via une méthodologie de conception précise.

Les modèles sont créés par l'utilisateur via l'atelier Product Knowledge Template (PKT) de CATIA V5 (marque déposée).

Ils permettent de reproduire une succession de constructions et opérations géométriques adaptées à des données d'entrées (paramètres et éléments géométriques). On réalise une première fois la succession de constructions et opération géométriques à partir de données d'entrée génériques. Puis on "photographie" le procédé pour l'encapsuler dans un modèle qui peut être réutilisé par la suite avec des données d'entrées spécifiques.

Il existe deux types de modèles : les gabarits et les copies optimisées.

Les gabarits sont des entités CATIA assimilables à une boîte noire, les entités géométriques encapsulées n'étant pas visibles par l'utilisateur final.

Les copies optimisées sont des entités CATIA (marque déposée) assimilables à une opération de construction automatique, les entités géométriques encapsulées étant re-créées dans l'arbre des spécifications.

En pratique, les différentes étapes de chacun des procédés selon l'invention (procédé de création de surface, procédé de création de modèle informatique, et procédé d'optimisation de surface) peuvent être déterminées par des instructions de programmes d'ordinateur.

En conséquence, l'invention vise aussi un programme d'ordinateur sur un support d'information, ce programme comportant des instructions adaptées à la mise en oeuvre des étapes d'au moins un des procédés mentionnés précédemment.

En effet, il est envisageable de concevoir un programme d'ordinateur pour chacun des procédés, ou un programme d'ordinateur apte à mettre en oeuvre au moins deux de ces procédés.

Ces programmes d'ordinateur peuvent utiliser n'importe quel langage de programmation et être sous la forme de code source, de code objet ou de code intermédiaire. Entre code source et code objet tels que dans une forme partiellement compilée ou dans n'importe quelle forme souhaitable.

Dans un mode particulier de l'invention, le programme d'ordinateur comportant des instructions pour l'exécution des étapes du procédé de création de modèle informatique peut se présenter sous la forme d'une bibliothèque apte à être intégrée, comme de façon connue de l'homme du métier, dans l'outil de CAO CATIA V5 (marque déposée).

L'invention vise aussi un support d'enregistrement lisible par un ordinateur sur lequel est enregistré un programme d'ordinateur apte à mettre en oeuvre au moins un des procédés de l'invention lorsque ce programme est exécuté par cet ordinateur.

L'invention vise également un ordinateur et une station de travail, comportant un support d'enregistrement conforme à l'invention, pour la mise en oeuvre d'un procédé de modélisation de surface axisymétrique et/ou la mise en oeuvre d'un procédé de création de gabarit et/ou la mise en oeuvre d'un procédé d'optimisation telle que mentionnée ci-dessus.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente, de façon schématique, un exemple de surface axisymétrique pouvant servir de base de départ pour créer une surface conformément à l'invention ;
- la figure 2 représente, sous forme d'organigramme, les principales étapes d'un procédé d'optimisation d'une surface conforme à l'invention dans un mode particulier de réalisation ;
- la figure 3 illustre la modélisation de la surface axisymétrique de la figure 1 ;
- la figure 4 illustre la modification de paramètres définis à la figure 3 ;
- la figure 5 représente différentes courbes de la surface obtenue à partir de la surface axisymétrique de la figure 3 ;
- les figures 6 à 8 illustrent la surface modélisée à la figure 5 et son utilisation dans un exemple ;
- la figure 9 représente sous forme d'organigramme, les différentes étapes d'un procédé de création d'une surface conforme à l'invention dans un mode particulier de réalisation,
- la figure 10 représente sous forme d'organigramme, les différentes étapes d'un procédé de création d'un modèle informatique conforme à l'invention dans un mode préféré de l'invention ;
- la figure 11 représente un ordinateur conforme à l'invention ; et
- les figures 12A et 12B, déjà décrites, illustrent un aspect particulier de l'invention.

Description détaillée d'un mode de réalisation

Nous allons maintenant décrire une utilisation particulière de l'invention pour optimiser la surface de plates-formes tridimensionnelles du type de celles utilisées dans la soufflante d'un turboréacteur dans le but d'optimiser la vitesse d'écoulement d'air entre les pales de cette soufflante.

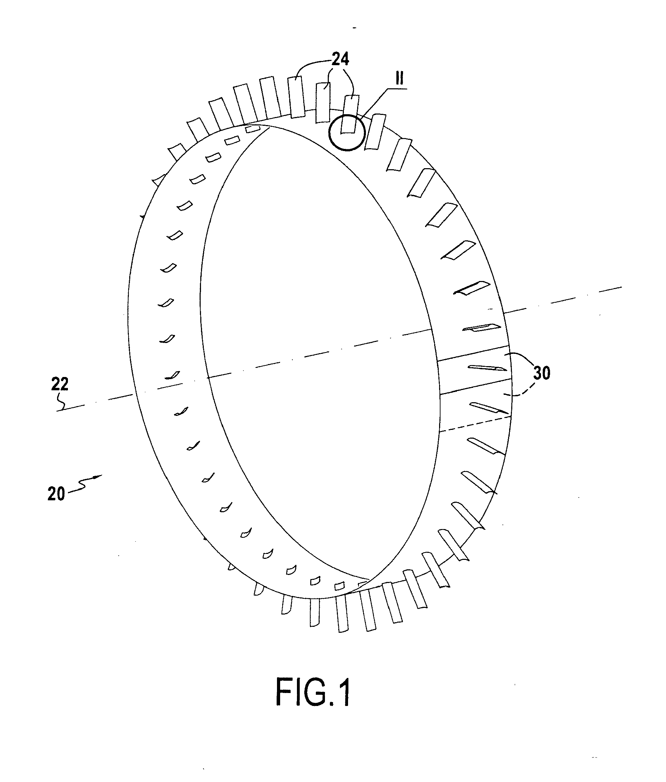

La figure 1 représente de façon schématique une virole 20 axisymétrique par rapport à l'axe longitudinal 22 de cette soufflante.

Nous supposerons dans cet exemple que cette virole 20 fait partie de l'étage d'un compresseur (sous-système au sens de l'invention) du turboréacteur (système au sens de l'invention).

La virole 20 est constituée d'une pluralité de plates-formes qui définissent une surface annulaire axisymétrique sensiblement continue lorsqu'elles sont mises bout à bout circonférentiellement.

On rappelle qu'une plateforme axisymétrique est une portion de surface axisymétrique, c'est-à-dire une portion de surface générée à partir d'une courbe génératrice et d'un axe de révolution.

Une pale 24 est fixée sur chacune des plates-formes 30 de façon connue en soi.

La surface externe axisymétrique 30 des plates-formes constitue une surface de veine d'écoulement du flux d'air entre les pales 24.

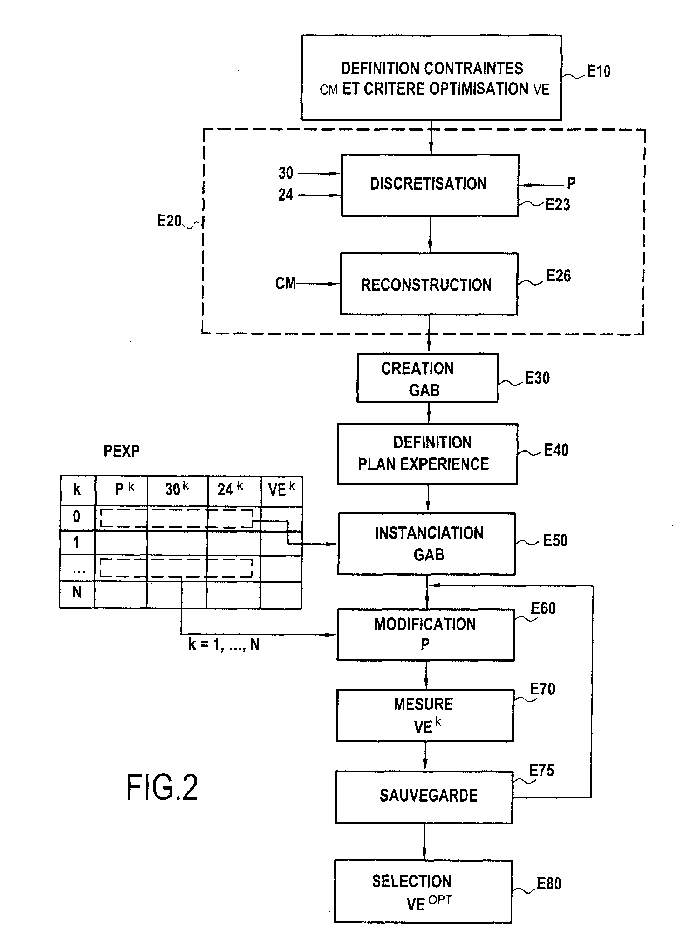

En référence à la figure 2, nous allons maintenant décrire comment modéliser la plateforme axisymétrique 30 avec des paramètres, ces paramètres pouvant être ensuite modifiés, selon un tableau d'expérience, pour déformer la plateforme axisymétrique 30 et obtenir différents modèles de plateformes $40^k$ pour lesquels la performance aérodynamique, à savoir la vitesse d'écoulement d'air entre les pales, peut être mesurée.

En référence à la figure 2, nous allons maintenant décrire plus précisément, le procédé d'optimisation mis en oeuvre dans cet exemple.

Ce procédé comporte une première étape E10 au cours de laquelle on définit le critère à optimiser, en l'occurrence la vitesse d'écoulement d'air VE entre les pales 24, et des contraintes CM qui doivent être respectées pour chacune des veines non axisymétriques $40^k$ qui seront évaluées.

Les contraintes CM seront explicitées en référence à l'étape E26 décrite ultérieurement.

L'étape E10 de définition de contraintes est suivie par une étape E20 au cours de laquelle on modélise la surface axisymétrique d'origine constituée par la plateforme 30 de la figure 1.

Dans l'exemple de réalisation décrit ici, cette étape de modélisation comporte :

- une sous-étape E23 de discrétisation ; et
- une sous-étape E26 de reconstruction.

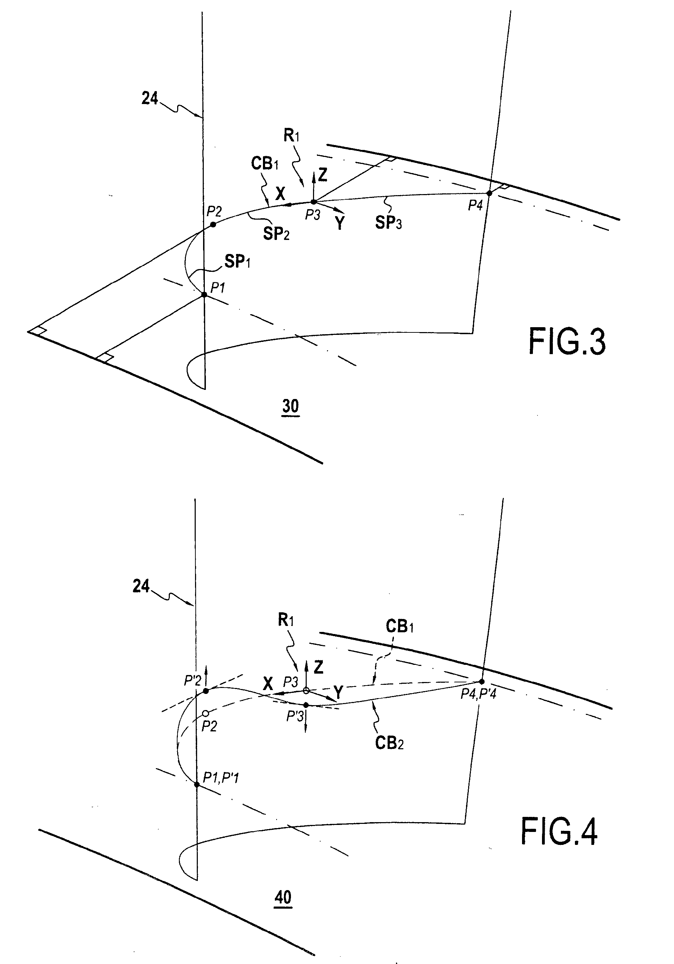

La sous-étape E23 de discrétisation est illustrée figure 3. Elle représente une vue agrandie suivant II de la figure 1, au niveau de l'intersection entre la plateforme axisymétrique 30 et une pale 24.

Au cours de cette sous-étape de discrétisation E23, on définit un certain nombre de points P1 à P4 à l'intersection entre la veine 30 et la surface squelette de la pale 24. Dans un autre exemple de réalisation, des points de la plateforme axisymétrique 30 qui ne se situent pas à l'intersection de la pale 24 pourraient être obtenus.

On rappelle que la surface squelette de la pale peut être définie comme une surface médiane à l'intrados et à l'extrados de la pale.

Puis, on exprime les coordonnées de chacun des points $P_i$ dans un repère associé à au moins une partie de cet étage du compresseur.

Plus précisément, dans cet exemple, les coordonnées des points P1 à P4 sont définies dans un même repère $R_1$, représenté à la figure 3, deux axes de ce repère (X, Y) étant tangents à la plateforme axisymétrique 30, le troisième axe de ce repère (Z) étant tangent à la pale 24.

Dans cet exemple, le repère $R_1$ n'est ni orthogonal ni orthonormé. On remarquera, que dans cet exemple de réalisation, le repère $R_1$ est associé au point P3, l'origine de ce repère étant confondue avec le point P3.

Chaque point P1 à P4 est donc défini par trois coordonnées, la coordonnée selon l'axe Z constituant un paramètre de modélisation de la plateforme axisymétrique 30.

Au cours de la sous-étape E26 de reconstruction, on établit des contraintes entre les points P1 à P4 à partir des contraintes CM définies à l'étape E10.

Dans l'exemple décrit ici, ces contraintes sont d'une part des contraintes filaires et d'autre part des contraintes surfaciques.

Plus précisément, les contraintes filaires choisies dans cet exemple, sont des contraintes selon lesquelles on relie les points P1 à P4 deux à deux par des splines $SP_1$, $SP_2$, $SP_3$, ces splines étant regroupées par trois afin d'obtenir une courbe $CB_1$ de degré 2 passant par les quatre points P1 à P4, chaque spline étant tangente à sa ou ses splines voisines.

La contrainte surfacique choisie ici impose que les splines extrémums $SP_1$ et $SP_3$ soient tangentes à la plateforme axisymétrique 30.

Dans le mode de réalisation décrit ici, cette sous-étape E26 de reconstruction termine la modélisation de la veine axisymétrique 30.

Il est remarquable de noter, en référence à la figure 4, que dès que l'on modifie une coordonnée de l'un des points P1 à P4 selon l'axe Z pour écarter ce point de la plateforme axisymétrique 30, on obtient un modèle d'une plateforme 40 non axisymétrique.

Par conséquent, l'invention propose une solution excessivement simple pour modéliser une surface non axisymétrique 40 à partir d'une surface axisymétrique d'origine 30.

Dans la suite de ce document, on notera P1' à P4' le point obtenu à partir du point P1 à P4 par modification de sa coordonnée Z.

Le déplacement des points P1 à P4 en P'1 et P'4 déforme la courbe $CB_1$. Sur la figure 4, on a référencé $CB_2$ la courbe après déformation, la référence $CB_1$ sur cette figure représentant la trace de cette courbe avant déformation.

Les figures 3 et 4 précédemment décrites permettaient d'illustrer le principe général de la modélisation d'une surface 40 sous contraintes conformément à l'invention.

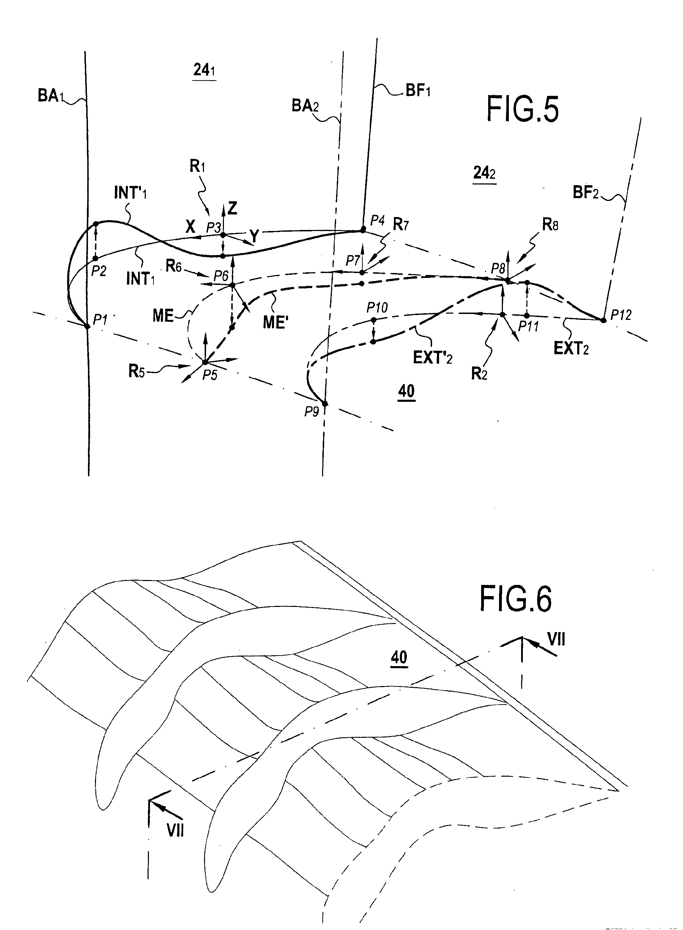

En référence à la figure 5, nous allons illustrer la modélisation d'une surface de la plateforme 30 de la figure 1.

Sur cette figure, nous avons représenté une première pale $24_1$ en trait plein et une deuxième pale $24_2$ en traits mixtes.

Les bords d'attaque des pales $24_1$ et $24_2$ sont respectivement référencés $BA_1$ et $BA_2$.

Les bords de fuite des pales $24_1$ et $24_2$ sont référencés $BF_1$ et $BF_2$.

A la figure 5 on a représenté :

- quatre points P1 à P4 à l'intersection de la plateforme axisymétrique 30 et de la surface squelette de la pale $24_1$ ;
- quatre points P9 à P12 à l'intersection de la plateforme axisymétrique 30 et de la surface squelette de la pale $24_2$ ; et
- quatre points P5 à P8 de la plateforme axisymétrique 30 dans une zone intermédiaire entre les deux zones définies par l'intermédiaire de cette plateforme respectivement avec la pale $24_1$ et la pale $24_2$.

Ces douze points P1 à P12 sont obtenus lors de la discrétisation de la plateforme axisymétrique 30.

Conformément à l'invention, les coordonnées de chacun de ces points sont exprimées dans un repère associé à une partie de l'étage du compresseur. Plus précisément :

- les coordonnées des points P1 à P3 sont exprimées dans le repère $R_1$ déjà décrit ;
- les coordonnées des points P9 à P12 sont exprimées dans un repère $R_2$, deux axes (X, Y) de ce repère étant tangents à la plateforme axisymétrique 30, le troisième axe de ce repère (Z) étant tangent à la pale $24_2$ ;
- les coordonnées de chacun des points P5 à P8 sont exprimées dans un repère $R_5$ à $R_8$, deux axes (X, Y) de chacun de ces repères étant tangents à la plateforme axisymétrique 30, le troisième axe de ce repère (Z) étant normal à cette plateforme. Dans l'exemple de réalisation décrit ici, les repères $R_i$ sont choisis en fonction des degrés de liberté des points qu'ils repèrent.

Ainsi, pour les points P1 à P4 et P9 à P12 à qui on impose de se déplacer sur une aube dans une seule direction, on choisit des repères $R_1$, $R_2$ dont un axe Z coïncide avec cette direction. Bien entendu, dans cette exemple les axes Z des repères $R_1$, $R_2$ ne sont pas parallèles.

En revanche, les points P5 à P8 peuvent être déplacés dans toutes les directions. Dans cet exemple on choisit d'associer un repère à chacun de ces points.

Quoiqu'il en soit, l'utilisation d'un repère local au sous-système facilite la description des surfaces et des contraintes et permet de mieux visualiser les déplacements pour l'utilisateur. Elle permet aussi de faciliter le calcul des positions de chacun des points.

Conformément à l'invention, on définit ensuite, lors d'une étape de reconstruction, trois courbes $SQ_1$, ME et $SQ_2$ passant respectivement par les points P1 à P4, P5 à P8 et P9 à P12.

Chaque courbe $SQ_1$, ME et $SQ_2$ est définie par trois splines. Par exemple la courbe $SQ_1$ est définie par les splines (P1, P2), (P2, P3) et (P3, P4).

L'homme du métier comprendra que les courbes $SQ_1$ et $SQ_2$ obtenues mathématiquement s'approchent des courbes physiques correspondant à l'intersection du squelette de la pale $24_1$ et du squelette de la pale $24_2$ avec la plateforme axisymétrique 30.

Les courbes $SQ_1$', ME' et $SQ_2$' représentent respectivement les courbes paramétrables $SQ_1$, ME et $SQ_2$ déformées par le déplacement des points P2, P3, P6, P7, P10 et P11 selon l'axe Z de chacun des repères concernés.

La **figure 6** représente la surface 40 obtenue en reliant les courbes $SQ_1$', ME', $SQ_2$' en respectant les contraintes surfaciques qui imposent que les splines extrémums restent tangentes à la plateforme axisymétrique 30, une spline extrémum étant une spline avec une extrémité comprise sur un bord d'attaque $BA_i$ ou un bord de fuite $BF_i$.

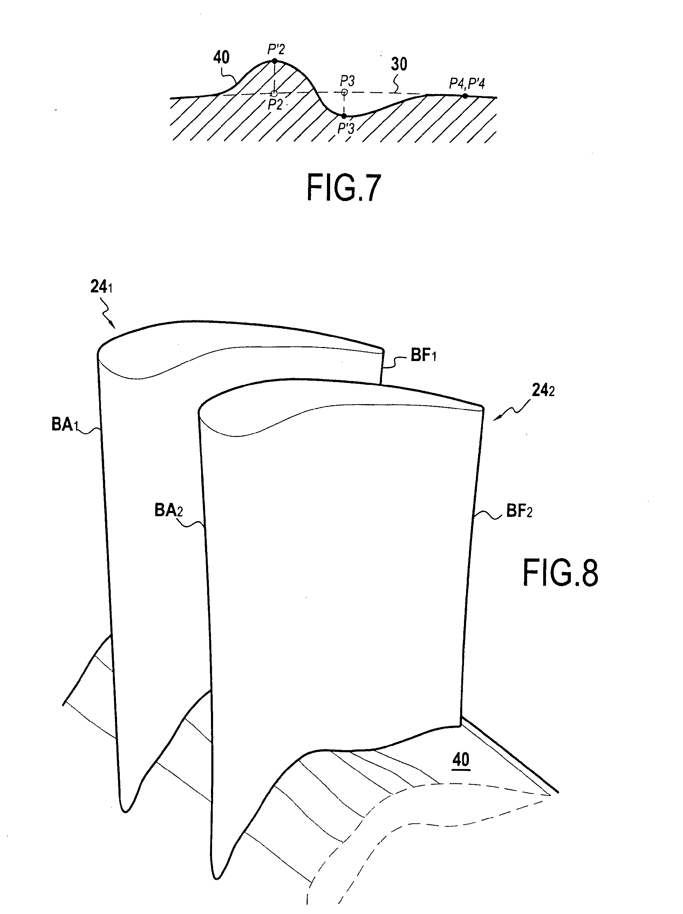

La **figure 7** est une coupe VII-VII de la figure 6 sur laquelle on a représenté d'une part les points P2, P3 et P4 de la plateforme axisymétrique d'origine 30 et les points P'2 à P'4 de la plateforme 40 obtenus à partir des points P2 à P4 par modification d'un paramètre à savoir par modification d'une coordonnée selon l'axe Z parallèle aux pales $24_1$ et $24_2$.

La **figure 8** représente les pales $24_1$ et $24_2$ sur la surface 40 de la figure 6.

On rappelle, que dans le mode de réalisation décrit ici, on cherche la surface 40 qui permet d'optimiser la vitesse d'écoulement VE entre les pales 24.

Conformément au deuxième aspect de l'invention, on propose d'effectuer cette optimisation dans l'environnement de CAO CATIA V5 (marque déposée) en utilisant le résultat de l'étape E20 de modélisation pour créer, au cours d'une étape E30, un modèle informatique CATIA, les paramètres de ce modèle informatique étant les coordonnées des points P1 à P12 dans leurs repères respectifs.

Ce modèle informatique peut prendre en entrée une surface axisymétrique d'origine quelconque, notamment une plateforme 30, et une deuxième surface quelconque de repère, par exemple la surface squelette d'une pale 24.

On définit ensuite, au cours d'une étape E40, un plan d'expérience PEXP représenté à la figure 2.

Dans l'exemple décrit ici, ce plan d'expérience comporte N combinaisons, chaque combinaison comportant des valeurs de paramètres $P^k$, une surface axisymétrique d'origine $30^k$ et une surface de repère $24^k$.

L'étape E40 de définition du plan d'expérience est suivie par une étape E50 d'instanciation du modèle informatique CATIA V5 (marque déposée) obtenu à l'étape E30 avec les paramètres P d'origine (coordonnées selon l'axe Z dans les repères $R_i$ égales à 0) de sorte que la première modélisation soit très proche de la surface axisymétrique d'origine.

Puis le procédé d'optimisation selon l'invention comporte une boucle constituée par les étapes E60 à E75 mises en oeuvre pour toutes les combinaisons k (= 1 à N) du plan d'expérience PEXP.

Cette boucle comporte une première étape E60 au cours de laquelle on modifie les paramètres en choisissant la ligne k = 1 du plan d'expérience, afin de créer une plateforme 40$^1$.

Puis, au cours d'une étape E70, on mesure le paramètre à optimiser pour la plateforme 40$^1$ ainsi obtenue, à savoir la vitesse d'écoulement VE$^1$.

Ce paramètre VE$^1$ est mémorisé dans le plan d'expérience PEXP au cours de l'étape E75.

On incrémente ensuite la valeur k (k = 2) et on retourne à l'étape E60.

Lorsque toutes les combinaisons ont été utilisées, la boucle E60-E75 se termine et on recherche, dans le plan d'expérience PEXP, la vitesse d'écoulement VE$^{OPT}$ optimale.

On identifie ainsi (étape E80) la plateforme 40$^{OPT}$ et la surface de pale 24$^{OPT}$ qui permettent d'obtenir cet écoulement.

A la figure 2, on a décrit un procédé de principales étapes d'un procédé d'optimisation de surface non axisymétrique conforme à l'invention.

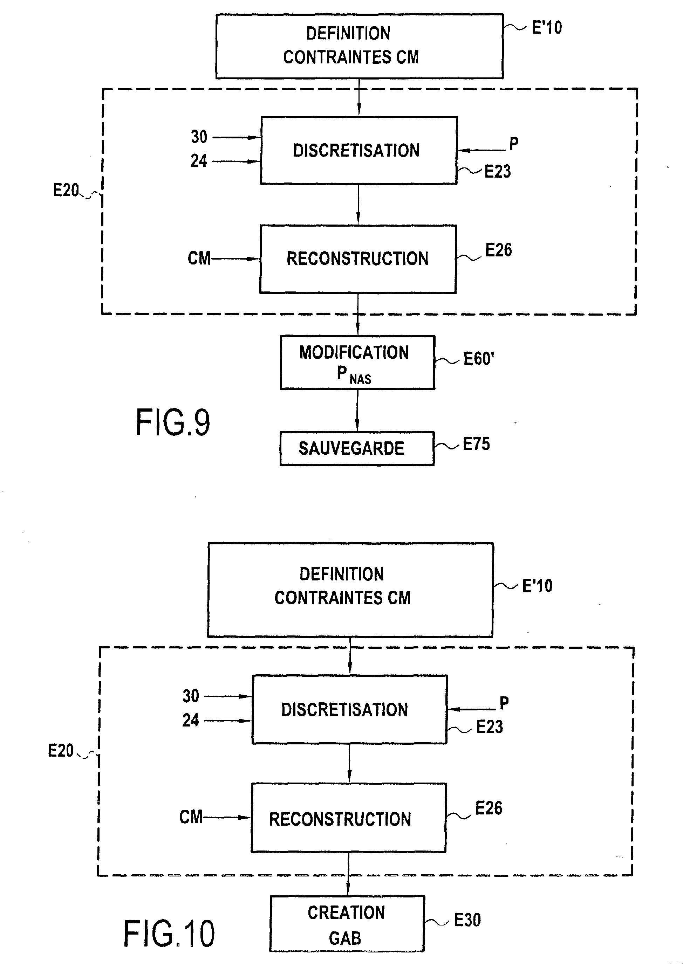

La **figure 9** représente, sous forme d'organigramme, les principales étapes d'un procédé de création d'une surface non axisymétrique conforme à l'invention, ce procédé pouvant être utilisé dans un contexte autre que celui de l'optimisation.

Ce procédé comporte :

- une étape E10' de définition de contraintes filaire et surfacique ;
- une étape E20 de modélisation d'une surface axisymétrique d'origine dans le respect des contraintes précitées ;
- une étape E60' de modification d'au moins un paramètre pour modéliser une surface; et
- une étape E75 de sauvegarde de cette surface dans une mémoire.

L'étape E10' diffère de l'étape E10 du procédé d'optimisation décrit en référence à la figure 2, en ce qu'elle ne définit pas de critère d'optimisation.

L'étape E20 de modélisation est identique à celle du procédé d'optimisation décrit en référence à la figure 2.

L'étape E60' de modification d'un paramètre se fait, dans cet exemple décrit ici, sans utiliser de gabarit, en modifiant manuellement au moins un paramètre du modèle de surface axisymétrique.

L'étape E75 de sauvegarde est identique à celle du procédé d'optimisation décrit en référence à la figure 2.

La **figure 10** représente les principales étapes d'un procédé de création d'un modèle informatique CATIA V5 (marque déposée) conforme à l'invention, un tel procédé pouvant être mis en oeuvre en dehors du contexte de l'optimisation.

Dans l'exemple décrit ici, ce procédé de création de gabarit comporte :

- les étapes E10' de définition de contraintes et E20 de modélisation du procédé de modélisation de la figure 9 ; et
- l'étape E30 de création de modèle informatique du procédé d'optimisation de la figure 2.

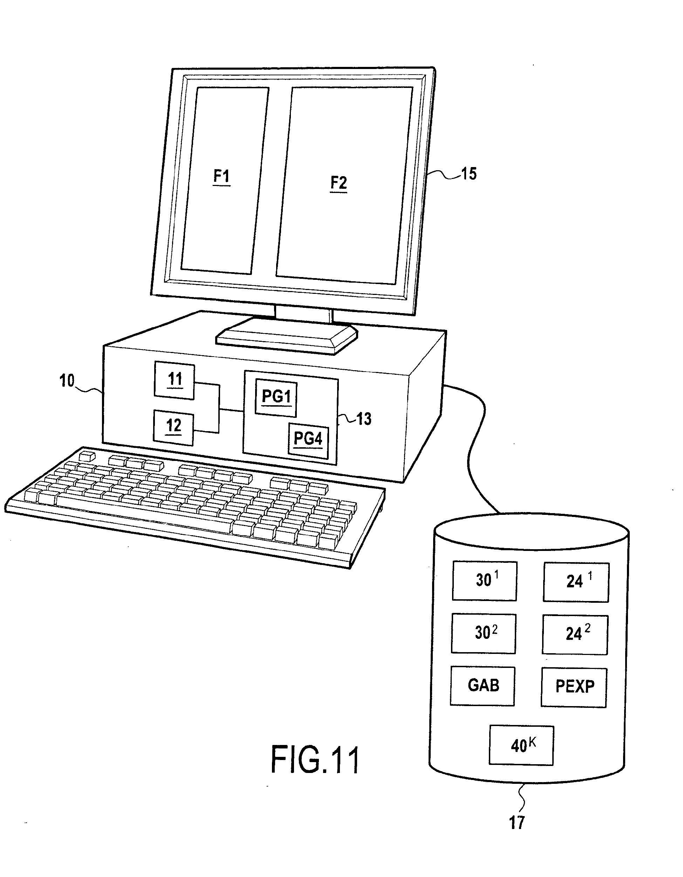

La **figure 11** représente de façon schématique un ordinateur ou station de travail 10 conforme à l'invention.

Cet ordinateur comporte un processeur 11, une mémoire vive 12, et une mémoire morte de type ROM 13.

La mémoire morte 13 comporte un programme d'ordinateur PG1 comportant des instructions pour exécuter les étapes du procédé d'optimisation de la figure 2 et un programme d'ordinateur PG4 comportant des instructions pour mettre en oeuvre le logiciel de CAO CATIA V5 (marque déposée).

Dans un mode de réalisation décrit ici, l'ordinateur 10 comporte également un disque dur externe 17 dans lequel elle mémorise le modèle informatique CATIA V5 obtenu au cours de l'étape E30 décrite précédemment et un plan d'expérience PEXP obtenu au cours de l'étape E40 décrite précédemment.

Dans un mode de réalisation décrit ici, le disque dur externe 17 comporte également différentes surfaces axisymétriques d'origine 30$^k$ et différentes surfaces de repères 24$^k$, les surfaces 30$^k$ et 24$^k$ étant des paramètres du plan d'expérience PEXP.

Les plateformes 40$^K$ obtenues par la boucle des étapes E60 à E75 sont aussi sauvegardées dans le disque dur externe 17.

Dans l'exemple de réalisation décrit ici, l'ordinateur 10 comporte un écran 15 sur lequel sont affichées deux fenêtres F1 et F2 :

- la fenêtre F1 permettant à l'utilisateur de travailler sur le plan d'expérience PEXP ; et
- la fenêtre F2 utilisée pour visualiser les plateformes 40$^k$ obtenues pour les k différentes combinaisons du plan d'expérience PEXP.

L'invention concerne aussi un ordinateur non représenté comportant une mémoire morte mémorisant un ou plusieurs des programmes d'ordinateur PG1, PG2 et PG3.

**Revendications**

1. Procédé pouvant être mis en oeuvre par un ordinateur (10) pour créer, à partir d'une première surface axisymétrique (30), générée à partir d'une courbe génératrice et d'un axe de révolution, une deuxième surface (40) appartenant à un sous-système d'un système complexe, cette deuxième surface devant respecter au moins une contrainte CM mécanique, aérodynamique ou géométrique , ce procédé comportant :

- une étape (E20) de modélisation de ladite première surface axisymétrique (30), dans le respect de ladite contrainte CM, avec des paramètres (P), cette étape (E20) de modélisation comportant :

- une sous-étape (E23) de discrétisation permettant d'obtenir des points de ladite première surface axisymétrique (30) situés aux intersections de ladite première surface axisymétrique et de deux surfaces dites de repère, ces points étant destinés à se déplacer dans une direction de déplacement, chaque dit paramètre (P) étant une coordonnée d'un dit point de la première surface axisymétrique dans un repère associé à au moins une partie de ce sous-système, choisi de sorte qu'un axe Z de ce repère coïncide avec la direction de déplacement dudit point ; et
- une sous-étape (E26) de reconstruction de ladite première surface axisymétrique (30) à partir desdits points et de ladite au moins une contrainte CM au cours de laquelle :

○ on définit au moins deux courbes paramétrables, chaque courbe reliant au moins deux desdits points situés à l'intersection de ladite première surface axisymétrique et d'une dite surface de repère en respectant au moins une contrainte filaire, et étant apte à être déformée par déplacement des points qu'elle relie selon l'axe Z des repères associés à ces points ; et
○ on relie lesdites courbes en respectant au moins une contrainte surfacique pour reconstruire ladite première surface axisymétrique (30) ;

ladite au moins une contrainte filaire et ladite au moins une contrainte surfacique étant établies à partir de ladite au moins une contrainte CM ;

- une étape (E60') de modification d'au moins un dit paramètre (P) associé à un dit point, selon l'axe Z dans le repère choisi pour ce point pour modéliser ladite deuxième surface (40) ; et
- une étape (E75) d'enregistrement de ladite deuxième surface (40) dans une mémoire (17) dudit ordinateur (10).

2. Procédé de création de surface selon la revendication 1 **caractérisé en ce que** ledit repère est associé audit au moins un point.

3. Procédé de création de surface selon la revendication 1 ou 2, **caractérisé en ce que** ledit repère est défini en fonction de ladite première surface axisymétrique (30) et d'une dite surface ($24_1$,$24_2$) «de repère» comportant une intersection avec ladite première surface axisymétrique (30).

4. Procédé de création d'un modèle informatique (GAB) utilisable dans l'outil de CAO CATIA V5 (marque déposée) comportant une étape (E20) de création d'une deuxième surface (40) sous contrainte (24, CM) à partir d'une première surface axisymétrique (30) selon un procédé conforme à la revendication 3, ledit modèle ayant pour entrée ladite première surface axisymétrique (30) et une surface (24) de repère, le ou les paramètres (P) dudit procédé de création de surface (40) étant les paramètres dudit modèle informatique (GAB).

5. Procédé d'optimisation d'une deuxième surface (40) à partir d'une première surface axisymétrique (30), ce procédé comportant :

- une étape (E10) de définition d'au moins une contrainte CM mécanique, aérodynamique ou géométrique et d'un critère d'optimisation (VE) dont la valeur dépend de ladite deuxième surface (40) ;
- une étape (E40) d'établissement d'un plan d'expérience définissant une pluralité de combinaisons comportant différentes valeurs ($P^k$) de paramètres (P) ;
- une étape (E50, E60) de création d'une deuxième surface ($40^k$) selon un procédé conforme à l'une quelconque des revendications 1 à 3 pour chacune desdites combinaisons ($P^k$) ;
- une étape (E70, E75) de mesure et de sauvegarde du critère d'optimisation ($VE^k$) de ladite surface ($40^K$) correspondant à chacune desdites combinaisons; et

- une étape (E80) de sélection des paramètres

$$\left( P_{AS}^{OPT}, P_{NAS}^{OPT} \right)$$

de la combinaison pour laquelle ledit critère d'optimisation ($CE^{OPT}$) est optimal.

6. Procédé d'optimisation selon la revendication 5, **caractérisé en ce que** les combinaisons ($P^k$, $30^k$, $40^k$), dudit plan d'expérience (PEXP) comportent en outre différentes premières surfaces axisymétriques ($30^k$) et plusieurs surfaces de repère ($40^k$), et **en ce qu'**il comporte :

- une étape (E30) de création d'un modèle informatique (GAB) conforme au procédé de la revendication 4 ;
- ladite étape (E50, E75) de création comportant une étape (E50) d'instanciation dudit modèle (GAB) et une étape (E60) de modification des paramètres dudit modèle (GAB) avec une combinaison ($P^k$, $30^k$, $40^k$) du plan d'expérience (PEXP).

7. Programme d'ordinateur (PG1) comportant des instructions pour l'exécution des étapes du procédé de création de surface (40) selon l'une quelconque des revendications 1 à 3 lorsque ledit programme est exécuté par un ordinateur.

8. Programme d'ordinateur (PG2) comportant des instructions pour l'exécution des étapes du procédé de création de modèle informatique (GAB) selon la revendication 4 lorsque ledit programme est exécuté par un ordinateur.

9. Programme d'ordinateur (PG3) comportant des instructions pour l'exécution des étapes du procédé d'optimisation selon la revendication 5 ou 6 lorsque ledit programme est exécuté par un ordinateur.

10. Support d'enregistrement (13) lisible par un ordinateur (10) sur lequel est enregistré un programme d'ordinateur selon l'une quelconque des revendications 7 à 9.

11. Ordinateur comportant un support d'enregistrement selon la revendication 10.


**Patentansprüche**

1. Verfahren, das durch einen Computer (10) durchgeführt werden kann, um anhand einer axialsymmetrischen ersten Fläche (30), die mittels einer erzeugenden Kurve und einer Rotationsachse generiert wird, eine zu einem Teilsystem eines komplexen Systems gehörende zweite Fläche (40) zu erzeugen, wobei diese zweite Fläche wenigstens eine mechanische, aerodynamische oder geometrische Bedingung CM einhalten muß, wobei dieses Verfahren umfaßt:

- einen Schritt (E20) zum Modellieren der axialsymmetrischen ersten Fläche (30) unter Einhaltung der Bedingung CM, mit Parametern (P), wobei dieser Modellierungsschritt (E20) umfaßt:

- einen Diskretisierungsteilschritt (E23), der ermöglicht, Punkte der axialsymmetrischen ersten Fläche (30), die an den Schnittpunkten der axialsymmetrischen ersten Fläche und von zwei sogenannten Richtflächen gelegen sind, zu erhalten, wobei diese Punkte dazu bestimmt sind, sich in eine Bewegungsrichtung zu bewegen, wobei jeder Parameter (P) eine Koordinate eines Punktes der axialsymmetrischen ersten Fläche in einem wenigstens einem Teil dieses Teilsystems zugeordneten Koordinatensystem ist, das derart gewählt ist, daß eine Z-Achse dieses Koordinatensystems mit der Bewegungsrichtung des Punktes zusammenfällt, und

- einen Teilschritt (E26) zum Rekonstruieren der axialsymmetrischen ersten Fläche (30) anhand der Punkte und der wenigstens einen Bedingung CM, im Laufe dessen:

• wenigstens zwei parametrierbare Kurven definiert werden, wobei jede Kurve wenigstens zwei der an dem Schnittpunkt der axialsymmetrischen ersten Fläche und einer Richtfläche gelegenen Punkte unter Einhaltung wenigstens einer Drahtbedingung verbindet und geeignet ist, durch Bewegen der Punkte, die sie verbindet, entlang der Z-Achse der diesen Punkten zugeordneten Koordinatensysteme verformt zu werden, und

• die Kurven unter Einhaltung wenigstens einer Flächenbedingung verbunden werden, um die axialsymmetrische erste Fläche (30) zu rekonstruieren,

wobei die wenigstens eine Drahtbedingung und die wenigstens eine Flächenbedingung anhand der wenigstens einen Bedingung CM aufgestellt werden,
- einen Schritt (E60') zum Modifizieren wenigstens eines einem Punkt zugeordneten Parameters (P), entlang der Z-Achse in dem für diesen Punkt gewählten Koordinatensystem, um die zweite Fläche (40) zu modellieren, und
- einen Schritt (E75) zum Speichern der zweiten Fläche (40) in einem Speicher (17) des Computers (10).

2. Verfahren zum Erzeugen einer Fläche nach Anspruch 1, **dadurch gekennzeichnet, daß** das Koordinatensystem dem wenigstens einen Punkt zugeordnet ist.

3. Verfahren zum Erzeugen einer Fläche nach Anspruch 1 oder 2, **dadurch gekennzeichnet, daß** das Koordinatensystem in Abhängigkeit der axialsymmetrischen ersten Fläche (30) und einer "Richt"-Fläche ($24_1$, $24_2$), welche einen Schnittpunkt mit der axialsymmetrischen ersten Fläche (30) umfaßt, definiert wird.

**4.** Verfahren zum Erzeugen eines Computermodells (GAB), das in einem CAD-Werkzeug CATIA V5 (Warenzeichen) verwendbar ist, umfassend einen Schritt (E20) zum Erzeugen einer zweiten Fläche (40) unter einer Bedingung (24, CM) anhand einer axialsymmetrischen ersten Fläche (30) nach einem Verfahren gemäß Anspruch 3, wobei das Modell als Eingabe die axialsymmetrische erste Fläche (30) und eine Richtfläche (24) hat, wobei der oder die Parameter (P) des Verfahrens zum Erzeugen einer Fläche (40) die Parameter des Computermodells (GAB) sind.

**5.** Verfahren zur Optimierung einer zweiten Fläche (40) anhand einer axialsymmetrischen ersten Fläche (30), wobei dieses Verfahren umfaßt:

- einen Schritt (E10) zum Definieren wenigstens einer mechanischen, aerodynamischen oder geometrischen Bedingung CM und eines Optimierungskriteriums (VE), dessen Wert von der zweiten Fläche (40) abhängt,
- einen Schritt (E40) zum Erstellen eines Versuchsplans, der eine Vielzahl von Kombinationen, welche unterschiedliche Werte ($P^k$) von Parametern (P) umfassen, definiert,
- einen Schritt (E50, E60) zum Erzeugen einer zweiten Fläche ($40^k$) nach einem Verfahren gemäß einem der Ansprüche 1 bis 3, für jede der Kombinationen ($P^k$),
- einen Schritt (E70, E75) zum Messen und Sichern des Optimierungskriteriums ($VE^k$) der Fläche ($40^k$), das jeder der Kombinationen entspricht, sowie

- einen Schritt (E80) zum Auswählen der Parameter $\left( P_{AS}^{OPT}, P_{NAS}^{OPT} \right)$ der Kombination, für die das Optimierungskriterium ($CE^{OPT}$) optimal ist.

**6.** Optimierungsverfahren nach Anspruch 5, **dadurch gekennzeichnet, daß** die Kombinationen ($P^k$, $30^k$, $40^k$) des Versuchsplans (PEXP) ferner verschiedene axialsymmetrische erste Flächen ($30^k$) sowie mehrere Richtflächen ($40^k$) umfassen und daß es umfaßt:

- einen Schritt (E30) zum Erzeugen eines Computermodells (GAB) nach dem Verfahren des Anspruchs 4,
- den Erzeugungsschritt (E50, E75), umfassend einen Schritt (E50) zum Instantiieren des Modells (GAB) und einen Schritt (E60) zum Modifizieren der Parameter des Modells (GAB) mit einer Kombination ($P^k$, $30^k$, $40^k$) des Versuchsplans (PEXP).

**7.** Computerprogramm (PG1), umfassend Befehle zum Durchführen der Schritte des Verfahrens zum Erzeugen einer Fläche (40) nach einem der Ansprüche 1 bis 3, wenn das Programm durch einen Computer ausgeführt wird.

**8.** Computerprogramm (PG2), umfassend Befehle zum Durchführen der Schritte des Verfahrens zum Erzeugen eines Computermodells (GAB) nach Anspruch 4, wenn das Programm durch einen Computer ausgeführt wird.

**9.** Computerprogramm (PG3), umfassend Befehle zum Durchführen der Schritte des Optimierungsverfahrens nach Anspruch 5 oder 6, wenn das Programm durch einen Computer ausgeführt wird.

**10.** Durch einen Computer (10) lesbarer Speicherträger (13), auf dem ein Computerprogramm nach einem der Ansprüche 7 bis 9 gespeichert ist.

**11.** Computer, umfassend einen Speicherträger nach Anspruch 10.

**Claims**

**1.** A method which may be applied by a computer (10) for creating, from a first axisymmetrical surface (30) generated from a generating curve and an axis of revolution, a second surface (40) belonging to a subsystem of a complex system, this second surface having to observe at least one mechanical, aerodynamic or geometrical constraint CM, this method including:

- a step (E20) for modeling said first axisymmetrical surface (30), while observing said constraint CM, with parameters (P), this modeling step (E20) including:

- a discretization sub-step (E23) with which points of said first axisymmetrical surface (30) located at the intersections of said first axisymmetrical surface and two surfaces, called reference system surfaces, may be obtained, those points being intended to move along a displacement direction, each said parameter (P) being a coordinate of one said point of the first axisymmetrical surface in a reference system associated with at least one portion of this sub-system, selected so that one Z axis of this reference system coincides with the displacement direction of said point; and
- a sub-step (E26) for reconstructing said first axisymmetrical surface (30) from said points and from said at least one constraint CM wherein:

o at least two parameterizable curves are defined, each curve connecting at least two of said points located at the intersection of said first axisymmetrical surface and one said reference system surface while observing at least one wireframe constraint, and being adapted to be deformed by displacement of the points connected by said curve along the Z axis of the reference systems associated to those points; and
o said curves are connected while observing at least one surface constraint for reconstructing said first axisymmetrical surface (30);

said at least one wireframe constraint and said at least one surface constraint being established from said at least one constraint CM;
- a step (E60') for modifying at least one said parameter (P) associated to one said point along the Z axis in the reference system selected for that point for modeling said second surface (40); and
- a step (E75) for recording said second surface (40) in a memory (17) of said computer (10).

2. The method for creating a surface according to claim 1 **characterized in that** said reference system is associated with said at least one point.

3. The method for creating a surface according to claim 1 or 2, **characterized in that** said reference system is defined according to said first axisymmetrical surface (30) and one said reference system surface $(24_1, 24_2)$ including an intersection with said first axisymmetrical surface (30).

4. A method for creating a computer model (GAB) which may be used in the CATIA V5 (registered trademark) CAD tool including a step (E20) for creating a second surface (40) under a constraint (24, CM) from a first axisymmetrical surface (30) according to a method in accordance with claim 3, said model having as an input said first axisymmetrical surface (30) and a reference system surface (24), the parameter(s) (P) of said surface creation method (40) being the parameters of said computer model (GAB).

5. A method for optimizing a second surface (40) from a first axisymmetrical surface (30), this method including:

- a step (E10) for defining at least one mechanical, aerodynamic or geometrical constraint CM and an optimization criterion (VE), the value of which depends on said second surface (40);
- a step (E40) for establishing an experimental plane defining a plurality of combinations including different values ($P^k$) of parameters (P);
- a step (E50, E60) for creating a second surface ($40^k$) according to a method in accordance with any of claims 1 to 3 for each of said combinations ($P^k$);
- a step (E70, E75) for measuring and saving the optimization criterion ($VE^k$) of said surface ($40^k$) corresponding to each of said combinations; and

- a step (E80) for selecting the parameters $\left( P_{AS}^{OPT}, P_{NAS}^{OPT} \right)$ of the combination for which said optimization criterion ($CE^{OPT}$) is optimum.

6. The optimization method according to claim 5, **characterized in that** the combinations ($P^k$, $30^k$, $40^k$) of said experimental plane (PEXP) further include different first axisymmetrical surfaces ($30^k$) and several reference system surfaces ($40^k$), and **in that** it includes:

- a step (E30) for creating a computer model (GAB) in accordance with the method of claim 4;
- said creation step (E50, E75) including a step (E50) for instantiation of said model (GAB) and a step (E60) for modifying the parameters of said model (GAB) with a combination ($P^k$, $30^k$, $40^k$) of the experimental plane (PEXP).

7. A computer program (PG1) including instructions for executing the steps of the surface creation method (4) according to claims 1 to 3 when said program is executed by a computer.

8. A computer program (PGS2) including instructions for executing the steps of the method for creating a computer model (GAB) according to claim 4 when said program is executed by a computer.

9. A computer program (PG3) including instructions for executing the steps of the optimization method according to claim 5 or 6 when said program is executed by a computer.

10. A recording medium (13) legible by a computer (10) on which is recorded a computer program according to any of claims 7 to 9.

11. A computer including a recording medium according to claim 10.

EP 2 359 339 B1

FIG.1

12

```
┌─────────────────────────────────┐
│    DEFINITION CONTRAINTES        │  ╭─ E10
│ CM ET CRITERE OPTIMISATION VE    │
└─────────────────────────────────┘
```

```
          ┌──────────────────────────────────────────────┐
          │                                              │
30 ─────→ │    ┌─────────────────────┐                   │
          │    │   DISCRETISATION    │ ←─ P              │
24 ─────→ │    └─────────────────────┘ ╭─ E23           │
   E20 ~  │             │                                │
          │    ┌─────────────────────┐                   │
CM ─────→ │    │   RECONSTRUCTION    │ ╭─ E26           │
          │    └─────────────────────┘                   │
          └──────────────────────────────────────────────┘
```

```
                    ┌──────────────┐
                    │   CREATION   │ ╭─ E30
                    │     GAB      │
                    └──────────────┘
```

```
PEXP                ┌──────────────────┐
                    │   DEFINITION     │ ╭─ E40
                    │ PLAN EXPERIENCE  │
                    └──────────────────┘
```

| k | $P^k$ | $30^k$ | $24^k$ | $VE^k$ |
|---|-------|--------|--------|--------|
| 0 |       |        |        |        |
| 1 |       |        |        |        |
| ... |     |        |        |        |
| N |       |        |        |        |

```
                    ┌──────────────────┐
                    │  INSTANCIATION   │ ╭─ E50
                    │      GAB         │
                    └──────────────────┘

k = 1, ..., N       ┌──────────────────┐
                    │  MODIFICATION    │ ╭─ E60
                    │       P          │
                    └──────────────────┘

                    ┌──────────────────┐
                    │    MESURE        │ ╭─ E70
                    │     VE^k         │
                    └──────────────────┘

FIG.2               ┌──────────────────┐
                    │   SAUVEGARDE     │ ╭─ E75
                    └──────────────────┘

                    ┌──────────────────┐
                    │   SELECTION      │ ╭─ E80
                    │    VE^OPT        │
                    └──────────────────┘
```

FIG.3

FIG.4

FIG.5

FIG.6

FIG.7

FIG.8

DEFINITION
CONTRAINTES CM — E'10

30 →
24 → DISCRETISATION ← P
E23

CM → RECONSTRUCTION — E26

E20

MODIFICATION
$P_{NAS}$ — E60'

**FIG.9**

SAUVEGARDE — E75

DEFINITION
CONTRAINTES CM — E'10

30 →
24 → DISCRETISATION ← P
E23

CM → RECONSTRUCTION — E26

E20

**FIG.10**

CREATION
GAB — E30

FIG.11

FIG.12A
ART ANTERIEUR

FIG.12B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0108102 A

- US 6268871 B1

**Littérature non-brevet citée dans la description**

- **T. REUDING et al.** Automatic local updating of CAD surface models. *Proceeding of the SIAM Conference on Geomtric Design,* 01 Janvier 1993, 1-10